# EUROPEAN PATENT APPLICATION

(11) **EP 1 229 464 A1**
(43) Date of publication of application: **07.08.2002**
(21) Application number: 00969943.0
(22) Date of filing: 20.10.2000
(51) Int. Cl.: G06F 17/60

(54) **ELECTRONIC COMMERCE SYSTEM**

(30) Priority: 21.10.1999 JP 29895599; 21.03.2000 JP 2000079182; 03.08.2000 WO PCT/JP00/05228
(71) Applicant: Visionarts, Inc., Tokyo 104-0033 (JP); Sony Corporation, Tokyo 141-0001 (JP)
(72) Inventor: Fujita, Takeshi, Tokyo 104-0033 (JP); Endoh, Hitoshi, Tokyo 104-0033 (JP); Hatta, Nariaki, Tokyo 104-0033 (JP); Fujikawa, Yasufumi, Tokyo 104-0033 (JP)
(74) Representative: Boyce, Conor
(86) International application number: JP0007324
(87) International publication number: WO0129723

(57) **Abstract**

It is an object of the present invention is to provide an electronic commerce system and so on for enhancing the flexibility of electronic commerce over the Internet and for allowing users to perform commerce more easily.

In order to achieve the object, when a server device (20) sends predetermined image data corresponding to a traded subject, an identification information adding processing (205) adds identification information inherent to the traded subject to the image data. Then, commerce processing (304) of a terminal device (30) requests account settlement to an account settlement server (403) of an account settlement device (40) through account settlement processing (306) based on identification information extracted from the image data through image data processing (305).

## Description

ELECTRONIC COMMERCE SYSTEM AND ELECTRONIC COMMERCE METHOD, IDENTIFICATION INFORMATION ADDING DEVICE AND COMPUTER READABLE RECORDING MEDIUM ON WHICH IDENTIFICATION INFORMATION ADDING PROGRAM IS RECORDED, COMMERCE INFORMATION SUPPLY DEVICE AND COMPUTER READABLE RECORDING MEDIUM ON WHICH COMMERCE INFORMATION SUPPLY PROGRAM IS RECORDED, ACCOUNT-SETTLEMENT INFORMATION SUPPLY DEVICE AND COMPUTER READABLE RECORDING MEDIUM ON WHICH ACCOUNT-SETTLEMENT INFORMATION SUPPLY PROGRAM IS RECORDED, ACCOUNT-SETTLEMENT PROCESSING DEVICE AND COMPUTER READABLE RECORDING MEDIUM ON WHICH ACCOUNT-SETTLEMENT PROCESSING PROGRAM IS RECORDED AND ELECTRONIC COMMERCE TERMINAL AND COMPUTER READABLE MEDIUM ON WHICH ELECTRONIC COMMERCE PROGRAM IS RECORDED

### Technical Field

The present invention relates to an electronic commerce system and so on for providing information regarding electronic commerce over a network such as Internet, and more particularly to an electronic commerce system and so on for using identification information added to image data in order to enhance flexibility of commerce and to allow users to perform electronic commerce easily.

### Background Art

World Wide Web (WWW) services provided by many Hyper Text Transfer Protocol (HTTP) servers connected to Internet can be used easily by manipulating HTTP viewer software such as Web browser which is executed on user terminals connected to the Internet.

Introduction of Graphical User Interface (GUI) allows easier Web browser manipulation. Also, The number of HTTP servers connected to Internet is increasing rapidly. Thus, users can obtain more information easily, and WWW services have become widespread rapidly.

Recently, electronic commerce systems using such WWW services have been put to practical use.

In such electronic commerce systems, product information such as functions of the product, an appearance of the product, prices and so on are provided as HTML file, image data, and so on by an HTTP server connected to the Internet. Users can view the information on the products and obtain the product information by manipulating HTTP viewer software (Web browser) executed in a terminal.

The user having obtained the product information enters information on the traded product such the name and the price in a predetermined form provided from the HTTP server, for example so that the account-settlement can be performed by sending it to a server device accepting the account settlement information.

Further, an electronic commerce system also exists which allows selection of a product as necessary by viewing product information through a Web browser for final account settlement.

In the electric commerce system, an instruction from a user is detected based on an access to the HTTP server from the user, for example, in order to record information of the product when the user selects the product. (To put it specifically, in an HTML (Hyper Text Markup Language) file for providing product information, a button or the like for selecting a product is defined, and, when the button is selected, information regarding the product number, the price, and so on and information regarding the user (IP address or the like, for example) are passed to a predetermined process.) Thus, the user can select the product sequentially by viewing the product information as necessary.

Further, in an HTML file for providing product information, for example, a button or the like for instructing account settlement is defined in advance, and when the user selects in order to instruct the account settlement, a predetermined form including information such as a purchased products list and the prices based on products having been recorded is created and supplied to the user. The user having received this form enters information regarding the purchaser such as his name, address, and credit card number and sends it to a server device accepting the account settlement information in order to perform account settlement. Thus, the user can perform the transactions such as product purchasing easily.

In the above-described electronic commerce system for allowing the selection of a product as necessary by viewing the product information through the Web browser and further allowing the final account settlement thereof, it is necessary to record the selection condition and so on of the product for each user. Therefore, it is necessary to identify a user. As information for identifying the user, information indicating accesses from the specific user over the Internet such as an IP address of a terminal the user uses is required.

However, when the Internet is used for dial-up connection, it is common to assign a different IP address for each connection. Thus, the selection of a product and the account settlement therefor must be performed during one connection. That is, the account settlement for the selected product cannot be performed during later connection.

Further, even when connected to the Internet all the time, an IP address may differ for each start-up of the terminal device if the IP address of the terminal device is defined through the dynamic IP address control (so-called DHCP). Therefore, the product selection and the account settlement thereof must be performed before re-start of the terminal device.

Furthermore, when an IP address such as so-called NAT and IP masquerade is converted, only IP address of a router can be identified from the HTTP server side. Thus, the IP address of each terminal may not be identified.

By the way, in the electronic commerce system for allowing the proper product selection by viewing the product information through the Web browser and further allowing the final account settlement thereof, the product selection condition and the like are managed in the HTTP server. Therefore, account settlements for products provided in a plurality of HTTP servers could not be performed together.

The above-described account settlement cannot be performed over the Internet from the security viewpoint. For the account settlement, it may be necessary to send account settlement information by using a telephone, FAX or the like or it may be necessary to change the connection to a private line, VPN (virtual private network) or the like. Therefore, there has been room for more improvement in terms of the convenience.

The present invention was made in view of these problems as described above. It is an object of the present invention to provide an electronic commerce system or the like for enhancing the flexibility of commercial transactions and for allowing users to perform the commercial transactions more easily.

### Disclosure of Invention

The present invention is characterized in creating identification information including transaction identification information inherent to a traded subject and access identification information inherent to an access from a user, adding the created identification information to predetermined image data that a information supply device supplies, and recording a corresponding relationship between the transaction identification information and the above-described traded subject and a corresponding relationship between the access identification information and the information indicating user access condition.

Further, an information supply device may include application software such as an HTTP server, a file server and so on operating on a generic OS as well as processing built in a specific OS or a unit such as specific software.

Furthermore, an account settlement device may includes a device connected to a same network as that of a terminal as well as a device connected to a terminal via another line, a device connected through any other secure path such as VPN, which is physically the same network as that of the terminal.

In addition, the terminal may include HTTP software and so on operating on a generic OS as well as processing built in a specific OS or a unit such as specific software.

Also, a unit or processing for creating identification information inherent to a traded subject may include an extension program of the HTTP server as well as independent software for monitoring and controlling accesses to the image file, or a unit such as hardware having the same function.

Still further, a unit or processing for recording a corresponding relationship between identification information and information that the information supply server supplies may include software operating independently within the information supply device as well as a unit such as a log function of the HTTP server, or a unit such as software operating outside of the information supply device.

### Brief Description of Drawings

Fig. 1 is a block diagram of a configuration of an electronic commerce system according to one embodiment of the present invention;
Fig. 2 is a concept diagram showing an outline of operations of a server device, a terminal device and account settlement device constructing the above-described electronic commerce system;
Fig. 3 is a diagram showing one example of a table (creation log) recorded by a database of the above-described server device;
Fig. 4 is a diagram showing one example of an image displayed on a display device of the above-described terminal device;
Fig. 5 is a diagram showing one example of a table, (update log) recorded by the database of the above-described server device;
Fig. 6 is a diagram showing one example of an image displayed on the display device of the above-described terminal device when account settlement is performed according to a pre-paid method;
Fig. 7 is a structure diagram of an information image file showing a data structure of image related information;
Fig. 8 shows one example of the image related information;
Fig. 9 is an explanatory diagram of an access to a pointer through menu selection;
Fig. 10 is an explanatory diagram of telop display processing;
Fig. 11 is an explanatory diagram of information image addition through a drag and drop action from a menu;
Fig. 12 is an explanatory diagram of an embodiment in which a view of a first managing area and a view of a second managing area are switched through tab selection;
Fig. 13 is an explanatory diagram of an embodiment in which the view of the first managing area and the view of the second managing area are separated by frames in order to display them simultaneously; and
Fig. 14 is an explanatory diagram of an embodiment in which the second managing area (HTML) is displayed after updated and a new information image file is managed when the image file is accessed in the first managing area (HTML).

### Best Mode for Carrying Out the Invention

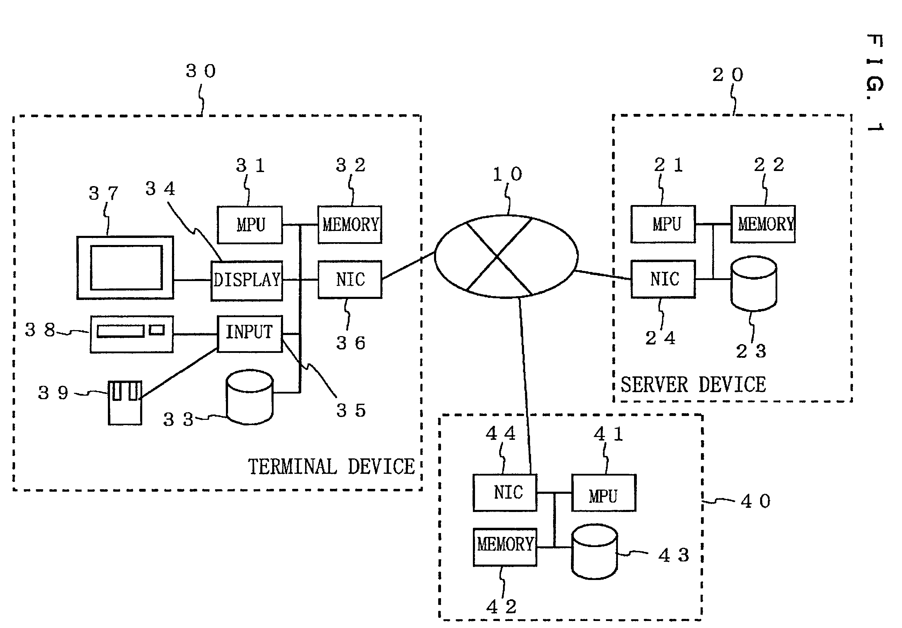

Fig. 1 is a block diagram showing a configuration of an electronic commerce system according to one embodiment of the present invention.

The electronic commerce system has a server device 20 connected over a network 10 such as Internet, a terminal device 30, and an account settlement device 40 for accepting account settlement information. While Fig. 1 includes one server device 20 connected to the network 10, one terminal device 30 and one account settlement device 40 for convenience, any particular limitation is not imposed for the number of the server device 20, the terminal device 30 and the account settlement device 40.

Further, as shown in Fig.1, the server device 20 and the account settlement device 40 may be configured as distinctive devices or may be configured as one identical device.

The server device 20 includes a microprocessor (MPU) 21, a memory 22, an operating system (OS), software such as HTTP server, a hard disk drive device (HDD) 23 in which image data and text data, and a network interface (NIC) 24 for example, is stored.

Further, the terminal device 30 includes a microprocessor (MPU) 31, a memory 32, an HDD 33 in which HTTP viewer software (web browser) and operation system (OS), for example, is stored, a display interface 34, an input interface 35, and a network interface (NIC) 36.

A display device 37 is connected to the display interface 34, and an operation screen for the OS, display screen for the web browser, and so on are displayed thereon. Further, a keyboard 38 and a pointing device 39 such as a mouse are connected to the input interface 35, and instructions from a user, for example, is input thereto through those peripheral devices.

Further, the account settlement device 40 includes, a microprocessor (MPU) 41, a memory 42, a hard disk drive device (HDD) 43 on which an operating system (OS), software such as HTTP server, image data, the like are stored, and a network interface (NIC) 44, and so on.

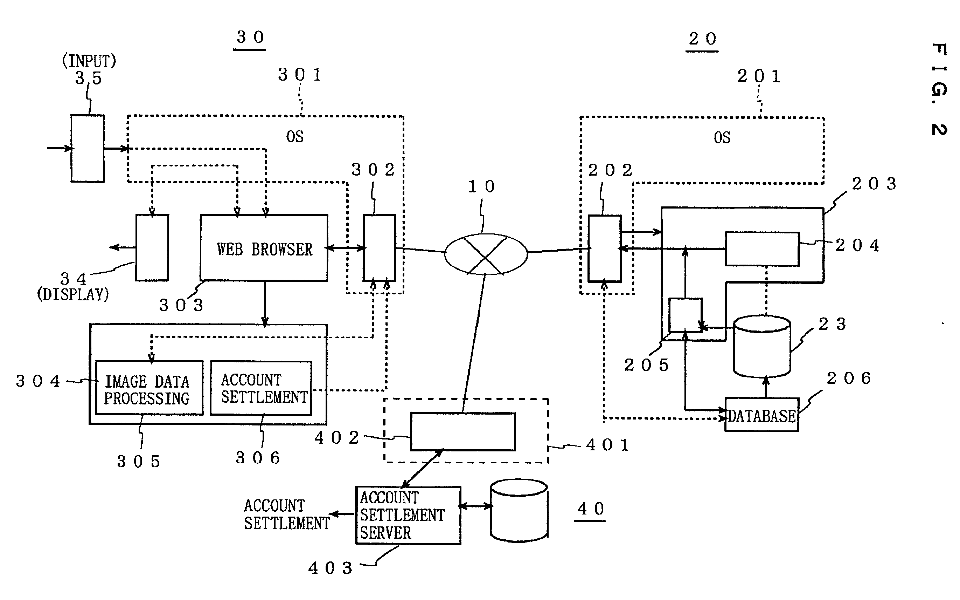

Fig. 2 is a concept diagram showing an outline of function blocks of server device 20, the terminal device 30, and the account settlement device 40.

In the server device 20, control of the entire device, communication control processing 202 for distributing communication processing to predetermined services such as Telnet, FTP, and HTTP based on port information, for example, and processing of an HTTP server 203, for example are executed in parallel under the control of an OS 201.

The HTTP server 203 provides information regarding a traded subject as an HTML file, image data, and so on.

Further, in the electronic commerce, it is necessary to identify a traded subject by the name of the traded subject, a price, and so on. In this commerce system, such information is identified by obtaining account settlement information corresponding identification information added to specific image data supplied to a user.

Thus, in the server device 20, executed are identification information adding processing 205 for adding, to specific image data that the HTTP server 203 sends, identification information (transaction identification information) inherent to each traded subject and identification information (access identification information) inherent to an access from a user and processing for the database 206, for example, for recording each identification information in advance in order to manage a table indicating correspondence between those identification information and account settlement information or the like such as image data to which the identification information is added, the name, the price and so on of each traded subject.

The Specific image data to which the identification information is added is referenced from an HTML file for providing information regarding a traded subject, for example, and is displayed on a display screen of the terminal device 30 based on the HTML file. In the terminal device 30, account settlement using identification information is executed by passing the image data to a predetermined transaction processing program.

Notably, the management of the table showing correspondence between the identification information and the account settlement information such as the name and the price of each traded subject may not have to be performed by processing for database 206 or the like, executed in the server device 20 and may be performed through processing executed in another device.

Further, in the terminal device 30, processing such as control of the entire device, communication control processing 302, control of inputs from a user, an Web browser 303, and commerce processing 304 are executed in parallel under the control of an OS 301.

The commerce processing 304 has image data processing 305 for executing extraction of the identification information added to image data as described above and so on and account settlement processing 306 for sending account settlement information and so on to the account settlement device 40 in order to request account settlement.

Further, in the account settlement device 40, under the control of the OS 401, control of the entire device, communication control processing 402, processing of the account settlement server 403 for processing an account settlement request based on account settlement information from the account settlement processing 306 of the terminal device 30, for example, are executed in parallel.

The account settlement processing executed by this account settlement server 403 may be account settlement by a credit card, account settlement by direct charging to a user account as well as account settlement by a so-called pre-paid method.

Notably, since the account settlement server 403 only needs to obtain information regarding the traded subject, acquisition of account settlement information such as the name, the price and so on of the traded subject corresponding to the transaction identification information added to the above-described specific image data may be performed, through operations shown as following (A) and (B), at the side of the account settlement device 40 (an example of A), or may be performed at the side of the terminal device 30 (an example of B). Thus, the implementation method can be changed as necessary.
(A) The account settlement server 403 receives only transaction identification information to which the above-described image data is added from the terminal device 30 and acquires account settlement information such as the price of the traded subject corresponding to the identification information from the terminal device 30; or
(B) The account settlement processing 306 executed in the terminal device 30 acquires account settlement information such as the price of the traded subject corresponding to identification information from the server device 20 and sends it to the account settlement server 403.

By the way, only the client ID is sent to the account settlement device 40 at the time of account settlement and then the account settlement device 40 acquires it from the database 206 or the account settlement device 40 acquires it from management information for identification so that the information relating to a purchaser such as his/her name, address, credit card number and so on can be identified if it is configured to be managed by corresponding it to a client ID by the database 206 or the like, or is configured to be managed by corresponding it to a client ID in the account settlement device 40.

For example, according to a conventional method for sending a cookie stored in the terminal device 30, since the cookie from each terminal device 40 is transmitted over the Internet, there is a possibility that information relating to a purchaser in the cookie may flow. The configuration in which only a client ID is sent from the terminal device 30 and the account settlement device 40 acquires information for specifying a user from the server device 20 reduces the number of the server device 20 in general with compared to the number of the terminal device 30. Further, the management technology of managers for the server device 20 may be higher than common users. Thus, the improvement of the security between the account settlement device 40 and the server device 20 is easier than the improvement of the security between the account settlement device 40 and the terminal device 30. Therefore, the possibility of flowing information relating to a purchaser can be reduced.

Alternatively, if only the client ID is enough, it may be sent from the terminal device 30 to the account settlement 40 at the time of account settlement from the transaction security point of view. This is because, by comparing the information relating the purchasers, which is acquired separately by the account settlement device and the information relating the purchaser from the terminal device 30, the reliability of information relating to the purchaser can be evaluated.

Alternatively, only the above-described transaction identification information may be used as the identification information in order to send the information relating to the purchaser such as his/her name, address, credit card number and so on from the terminal device 30 to the account settlement device 40 at the time of the account settlement.

An outline of general operations of the Web browser 303, the HTTP server 203, and the account settlement server 403 will be described below.

When a user manipulates the terminal device 30 through the input interface 35 and inputs an intended address (Uniform Resource Locator: URL, having a portion specifying a host name of a server in which the HTTP server is implemented and a portion specifying a file name), the Web browser 303 sends a connection request including a file name to the server device 20 corresponding to a host name. The connection request is supplied to the intended server device 20 over the network 10 and supplied to the HTTP server 203 through the communication control processing 202.

When the connection request is supplied, the HTTP server 203 reads out data corresponding to the file name in the connection request from the HDD 23 and sends it to the terminal device 30.

A URL instructed first by the user sometimes indicates a host name only or a host name and a particular directory only, and in such a case, a file having a standard name (index.html) in a root directory of a corresponding host or an indicated directory is read out first and then sent to the terminal device 30.

In such a file having a standard name or a file instructed by a user, links to a view of text, a view of an image, and other files, for example, are described according to the HTML (Hyper Text Markup Language).

The file from the HTTP server 203 is supplied to the Web browser 303 through the communication control processing 302 of the terminal device 30. The Web browser 303 creates a display image data in accordance with the description of the file and supplies it to the OS 301. The OS 301 deals the display image data from the Web browser 303 as an image in a window to be assigned to the Web browser and display it on a display screen of the display device 37 through the display interface 34.

Here, in the file supplied from the HTTP server 203, for example, when displaying an image along with a file name of image data is instructed, the Web browser 303 requests the HTTP server 203 to transmit image data corresponding to the file name.

When the transmission request is accepted, the HTTP server 203 reads out image data having a requested file name from the HDD 23 and transmits it to the web browser 303.

When the image data is received, the Web browser 303 deals the image data as image data in a predetermined location in the above-described image data and supplies it to the OS 301.

Thus, an image based on the received image data is displayed in a predetermined location in a window of the Web browser 303.

The product information is provided as described above, and the HTTP server 203 provides, in the same manner, the specific image data to which the above-described transaction identification information corresponding to the account settlement information is added.

The identification information adding processing 205 is implemented as an extension program (so-called plug-in) of the HTTP server 203, for example. When file transmission processing 204 within the HTTP server 203 reads out and sends a file of the particular image data from the HDD 23, the identification information adding processing 205 adds identification information such as the above-described transaction identification information and access identification information to the image data.

Since only each traded subject must be identified, numbers or codes, for example, added to each traded subject can be used as the transaction identification information. Further, names of traded subjects can be used if there is no overlapping.

Since the inherent information is enough if it is information inherent to each access, it can be created based on information such as an IP address of the terminal device 30 operated by a user and access date and time to the server. Alternatively, access identification information may be created by also using the inherent identification information (client ID) given to every user or every terminal device 30 for commerce processing 304 as described below.

Conversely, access date and time themselves may be used as the access identification information. Since two or more accesses to one server device 20 are not processed simultaneously in general, only access date and time are enough for defining each access. Therefore, each image data can be identified even when access date and time are added to the image data as the access identification information.

Further, as a function of the HTTP server, a function for recording a log of accesses from a user is implemented, and it is possible to record an IP address of the terminal device 30 of a user using the HTTP server, access date and time, and so on in the access log. Thus, when access date and time are used as identification information, the access log is referenced so that an IP address can be obtained which corresponds to the access date and time added to the image data. Therefore, the IP address of a user accessing to the image data can be identified easily.

Notably, only transaction identification information must be added in order to identify the account settlement information of each traded subject. Thus, the access identification information does not have to be added. However, the addition of access identification information facilitates identification of each access and then identification of an IP address, the above-described client ID, and so on of the terminal device 30 manipulated by a user. Therefore, it is desirable from the viewpoint of the improvement of the security and safety of the transaction.

Further, since addition of identification information is enough if it is performed to allow identification of image data, it may be added to a vacant area defined on an image file format, for example, or may be embedded in image data by using so-called electronic watermark technology which diffuses and adds it into the image data, or may be added in front or rear of a body of the image data on the image format. Furthermore, the identification information may be added as it is so as to suppress processing loads, or may be added after processing of proper encoding and encryption for improving security, for example.

The image data to which the identification information is added is handled similarly to general image data on the file transmission processing 204 and the communication control processing 202 and is sent to the Web browser 303 of the terminal device 30.

By the way, recorded in advance in the database 206 are names, prices, settlable account settlement method (credit card, wire-transfer, pre-paid method, and so on.), URLs indicating settlable account settlement servers 403 or an account settlement table showing a relationship between account settlement information inherent to each traded subject such as an access method to a line or a network such as VPN to which the account settlement server is connected and with transaction identification information.

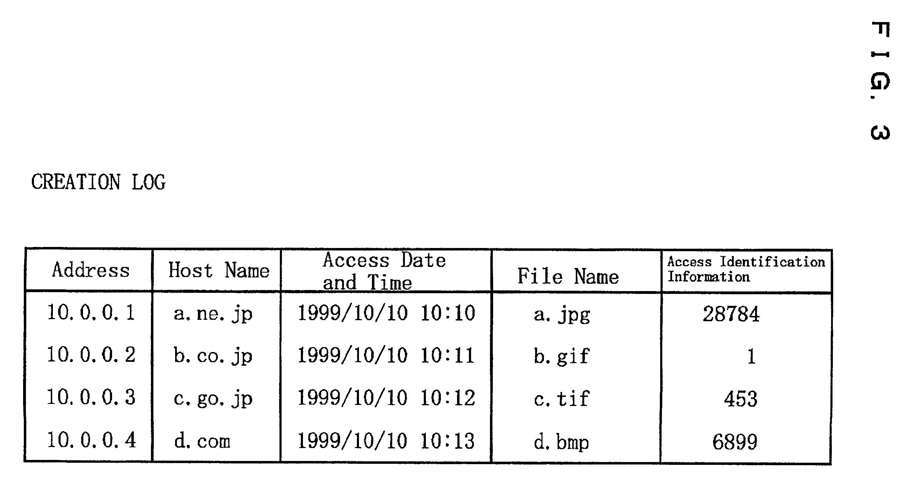

Further, the database 206 obtains information indicating conditions of user access through the OS 201 and the HTTP server 203, for example, creates a table (creation log) showing a corresponding relationship between access identification information that identification information adding processing 205 adds and information indicating user access conditions, and records it on HDD 23. The creation log includes, as shown in Fig. 3, for example, an accessing IP address, a host name of the server device 20 in which the HTTP server 203 operates, access date and time, a file name of image data, and the access identification information added by the identification information adding processing 205.

Thus, by referring to the creation log (or update log described below), the access identification information to which image data is added, an accessing IP address, the information indicating user access conditions such as access date and time can be obtained. Therefore, researches of user access conditions can be performed relatively easily.

In Fig. 2, while an example where the identification information adding processing 205 is implemented as an extension program of the HTTP server 203 is shown, it can be implemented as processing for placing an image file, for example, in a file server independent from the HTTP server in advance, monitoring an access to the file server, and, when access request is received for the specific image file, sending out image data to which transaction identification information and access identification information is added because it is enough if it has a function to add, to the specific image data, the above-described transaction identification information and access identification information.

In this case, the HTTP server and the file server, for example, are not necessary to be implemented as separate devices, but they may be executed as a plurality of server programs and identification information adding processing, for example, on a single OS. Alternatively, it is possible, by using a so-called emulator, to execute a plurality of OSs on a single device, execute processing as HTTP server on one OS, and execute processing as file server, for example on another OS. Thus, equivalent processing can be executed with a plurality of devices through they are physically one device.

By separating the HTTP server and the file server, for example, in this way, an access right, for example, can be set in the HTTP server and the file server, for example, separately, which increases flexibility for setting security, for example. Therefore, it can contribute to the improvement of security.

By the way, since identification information described above is not changed at the side of the terminal device 30, identification information or image data including identification information is stored in advance so that the account settlement can be performed later. That is, even when a user connecting to the Internet by dial-up releases the connection and the IP address is changed, the account settlement can be performed by using the stored identification information or image data to which identification information is added. Therefore, the selection and the account settlement by the traded subject do not have to be performed during one connection, which enhances the flexibility of the commerce.

Further, when the traded subject can perform account settlement in the same account settlement server, a plurality of pieces of identification information or image data to which identification information is added may be stored in advance. Then, when the user instructs the account settlement, transaction identification information in these identification information may be sent together to the account settlement server at the time of the account settlement. Thus, the account settlement can be performed at the same time even if the traded subject is supplied with information from different HTTP servers. It simplifies operations, and the user can perform commerce more easily.

Furthermore, the commerce processing 304 performed in the terminal device 20 performs processing based on identification information when the image data to which the identification information is supplied from the Web browser 303. Included in this processing is management for storage, deletion, update and so on of the image data based on the identification information added to the image data, for example. Additionally, processing for executing account settlement based on the transaction identification information to which the image data is added as described above is included.

A detail of each processing will be described below.

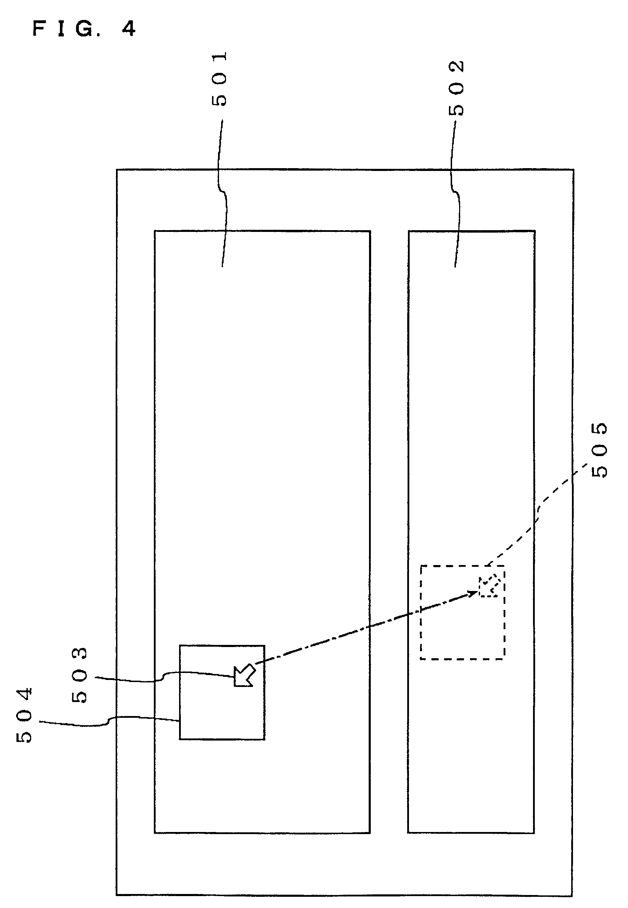

As shown in an example of display screen of a display device 37 in Fig. 4, a window 501 as well as a window 502 of the Web browser 303 are assigned to the image data processing 304 by the above-described OS 301.

Image data can be supplied from the Web browser 303 to the image data processing 304 under the control of the OS 301 by a so-called drag and drop operation.

That is, image data is supplied from the Web browser 303 to the commerce processing 304 through the OS 301 by operating a pointing device 39 by a user, matching a pointer 503 to a displayed position of an image 504 displayed within the window 401 of the Web browser 303, under a condition where a button, for example, of the pointing device 39 is manipulated, moving the pointer 503 onto the window 502 of the commerce processing 304, and releasing the operation of the button of the pointing device 39.

When image data is supplied, the image data processing 304 displays an image 505 corresponding to the supplied image data at a position of the pointer 503.

The image data is stored by the image data processing 304 at a predetermined area of the HDD 33 through the OS 301 when the image data is supplied through the above-described drag and drop operation.

Here, the commerce processing 304 may request the data base 206 the above-described account settlement information corresponding to the transaction identification information in the image data in order to store the account settlement information acquired from the database 206 by corresponding to the image data.

Further, image data is deleted by deleting image data selected by an instruction from a user from the predetermined area of the HDD 33.

Image data is updated in order to update stored image data to latest one at that time. The update processing may be executed in accordance with an instruction from a user, for example, or may be executed based on information such as creation date recorded in a file of image data. Further, it may be executed automatically for every predetermined interval.

When the update processing is started, the image data processing 304 extracts identification information added to image data to be updated and sends it to the HTTP server 203 and the database 206 the identification information and file name, for example, in order to request update of the image data.

The update request is supplied to the HTTP server 203, and the database 206 as a packet of a predetermined port through communication control processing 302, the network 10, and the communication control processing 202.

When updating, the image data processing 304 may send entire image data, and the HTTP server 203 or the database 206 may extract identification information from the obtained image data.

Further, inherent identification information (client ID) is given to the image data processing 304 for every user or for every terminal device 30. The client ID is supplied to the HTTP server 203 and the database 206 as a packet of a predetermined port through the communication control processing 302, the network 10 and the communication control processing 202 when image data is updated, for example.

The file transmission processing 204 of the HTTP server 203 instructs the HDD 23 to read out image data corresponding to a file name being requested for update.

Here, the identification information adding processing 205 creates new access identification information corresponding to a user access condition and adds it to image data. Further, the identification information adding processing 205 checks whether the transaction identification information is updated or not and, if the transaction identification information is updated, adds new transaction identification information to the image data.

Image data to which the new identification information is added is supplied to the image data processing 304 of the terminal device 30 through a predetermined port, and the image data is updated therein.

On the other hand, the database 206 obtains information indicating a user access condition through the OS 201 and the HTTP server 203, for example, creates a table showing a corresponding relationship between identification information added newly by the identification information adding processing 205 and information indicating a user access condition (update log), and records it on the HDD 23 separately from the above-described creation log.

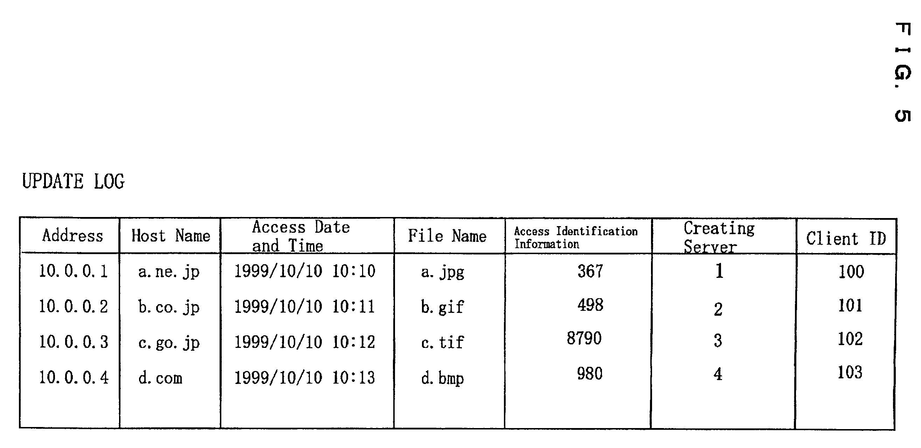

Like the creation log, as shown in Fig. 5, the update log includes an accessing IP address, a host name of the server device 20 to which identification information is added newly, access date and time (update date and time), a file name of image data, identification information added by the identification information adding processing 205 as well as information for identifying the server device 20 having created original identification information (creating server ID) and a client ID for identifying the terminal device 30 used by a user or the user.

Further, by referring to the update log, a path for obtaining image data, for example, can be identified accurately since information for identifying a user or the terminal device 30 corresponding to identification information added to the image data can be obtained. Therefore, by comparing information sent to the account settlement server 403 from a user and information relating to the user obtained from the updating log, the accuracy and the reliability of information form the user can be evaluated, which enhances the safety of the transaction more easily.

Furthermore, the account settlement processing based on transaction identification information added to the image data is performed by user's selection of specific image data and by instructing the account settlement.

When the account settlement is instructed, the account settlement processing 306 sends transaction identification information of the user selected image data, access identification information, and the above described client ID to the account settlement server 403, and the account settlement server 403 performs account settlement processing based on these identification information and so on.

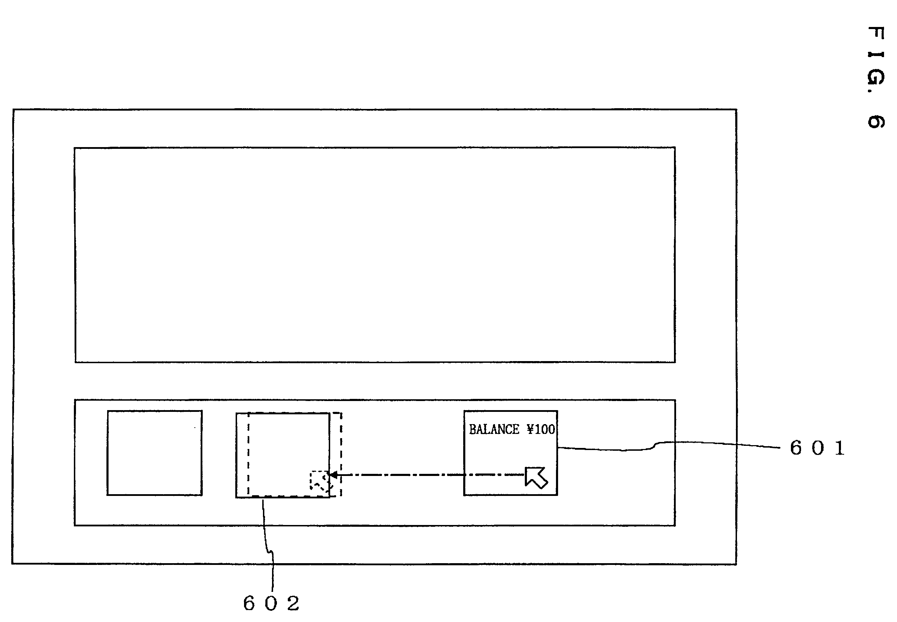

In addition, when the account settlement is performed by the pre-paid method, as shown in Fig. 6, a user may instruct by manipulating a pointing device 39 in order to overlap an image 601 including identification information corresponding to pre-paid information (pre-paid identification information) displayed on a display screen of the display device 37 on an image 602 of the account settlement target.

When such a instruction is supplied, the account settlement processing 306 sends transaction identification information, pre-paid identification information and so on to the account settlement server 403. The account settlement server 403 performed the account settlement processing based on these identification information.

Furthermore, as account settlement information corresponding to the above-described transaction identification information, for example, when a URL of an-account-settlable account settlement server 403 is included, the image data processing 305 supplies the URL to the account settlement processing 306 in order to instruct the account settlement. Thus, the user can instruct the account settlement to the account settlement server 403 of a predetermined URL by referencing image data only and the user can perform the commerce easily.

Also, as account settlement information corresponding to the above-described transaction identification information, when an access method to a network to which the account settlement server 403 (connection by private line, VPN, and so on, for example) is connected is indicated, the commerce processing 304 or the account settlement processing 306 may be configured to connect to the account settlement server 403 automatically by the corresponding access method through a communication control processing 302 in order to perform the account settlement. Thus, the user can perform commerce without caring accesses to the account settlement server 403 especially, which can improve the convenience.

In the above-described Fig. 2, while an example is shown where the commerce processing 304 is implemented as processing independent from the Web browser 303, it can be implemented as an extension program of the Web browser 303 (so-called plug-in) because it is enough if it has a function to send transaction identification information and so on added to image data based on instructions from the user.

Furthermore, the present invention is not limited to the above-described embodiment, and the construction and the implementation method can be changed properly within the scope of the technological spirit of the present invention.

For example, in the above-described Fig. 1, while the server device 20 and the account settlement device 40 are shown as single devices, respectively, a program for executing their processing can function as both server device and terminal device.

Further, in the description above, an example shows that the account settlement information is managed by the database 206 by corresponding to the transaction identification information in advance and the transaction identification information is added to image data. However, the transaction identification information as well as the account settlement information may be added to the image data.

The above-described embodiment will be described in detail below.

### [Structure of Image File]

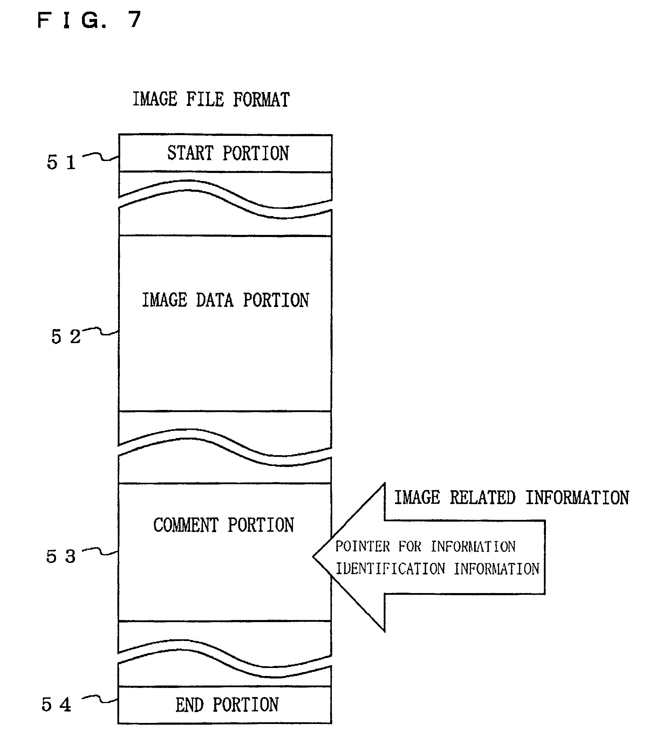

Fig. 7 is one example of a data structure of image file handled in the above-described embodiment. The image file shown in Fig. 7 includes a start portion 51 indicating the beginning of a data stream, an image data portion 52 for describing displayed data of an image, a comment portion 53 for describing information which is not influence on a view of an image, and an end portion 54 indicating an end of the data stream. For example, a JPEG file and GIF file adopt such a data structure. Identification information which is added to the above-described image data and/or pointer information such as a URL can be described in the comment portion 53 as information which does not influence on a view of the image. Further, even if it is in another image format, it can be described in a corresponding area if it is in a format having an area for information which does not influence on the view of the image. Further more, in the data stream of the image file, identification information inherent to the image file, pointers for one or a plurality of pieces of information, an index for a menu item corresponding to the image file, and/or an entity of a program can be written in an area which is ignored when the image is displayed. Also, as described above, they can be added to image data by using a digital watermark technology.

In the description below, identification information added to image data, pointer information and the like are referred to "image related information". Further, an image file in which the image related information is added to image data is referred to "information image file".

### [Structure of Image Related Information]

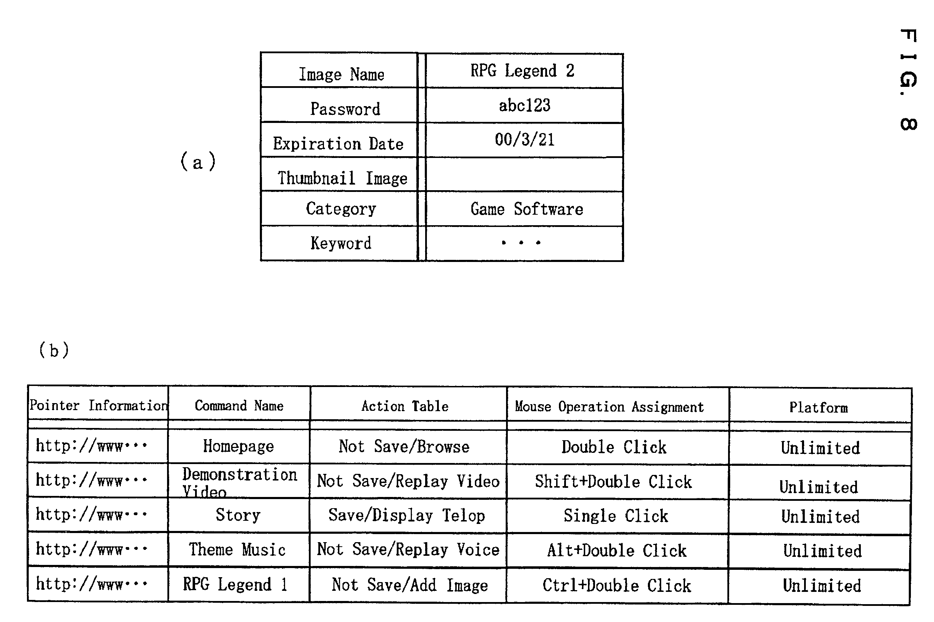

Fig. 8 is a structure diagram of image related information. The image related information shown in Fig. 8(a) includes information of an image name, a password, an expiration date, a thumbnail image, category, and keyword.

The "image name" is a name of an image which is thumbnail-displayed on the window 502 of the image data processing 305. The "password" is a password which requires a user to input when an information image file is supplied to the image data processing 305. Only users who know the password can register the information image file in the image data processing 305. The "expiration date" is an expiration date of the information image file supplied to the image data processing 305, and the information image file is removed from a recorded area of the HDD 33 after the expiration of the period. The "thumbnail image" is data of an image file which is replaced by an image displayed on a browser and thumb-nail displayed on a window of the image data processing 305 when the information image file displayed on the browser is supplied to the window of the image data processing 305. The "category" is data for specifying a folder in which information image file is stored when the information image file is supplied to the image data processing 305. The image data processing 305 creates newly a folder having a specified name when a specified folder does not exist. The "keyword" is a word which is used as a search key when the image data processing 305 searches the information image file.

The image related information shown in Fig. 8(b) is constructed by assigning a command name, an action table, and a mouse (pointing device) operation to each pointer information and associates them with a platform as one set.

The "pointer information" indicates a location of a file on a local computer or over a network. For example, the pointer information includes a file name, a path name indicating a location of resources on the local computer, Universal Naming Convention(UNC) indicating a location of resources in a network environment, Uniform Resource Locator (URL) indicating a location of resources on Internet or Intranet, or Uniform Resource Identifiers (URIs). The "command name" is a view name used when displaying a content of a pointer on a menu. For example, it is "Access To Homepage". Here, the "menu" is a menu which is displayed and can be selected therefrom on a display unit 37 when a right button of the mouse 39 is clicked. The "action table" indicates operations of the image data processing 305. A content of a specified operation includes whether or not a file indicated by pointer information added to the information image file is stored in the HDD (storage unit) 33 of the terminal device 30 when the information image file is supplied to the image data processing 305, whether or not the file is automatically executed, and a method for executing the file (telop display, video replay, voice replay, and so on). The "assigning mouse operation" sets a mouse operation for accessing pointer information. Types of setting includes double click, Shift+double click, Ctrl+ double click, Alt + double click, and so on. The "platform" specifies an environment (platform) matching with a file indicated by pointer information. For example, when the OS 301 is Windows (Trademark), the image data processing 305 selects a pointer for information corresponding to windows and displays it on the above-described menu.

### [Access to Pointer Information]

A method for accessing a pointer recorded in an information image file in the terminal device 30 will be described.

### (1) Method through Menu Selection

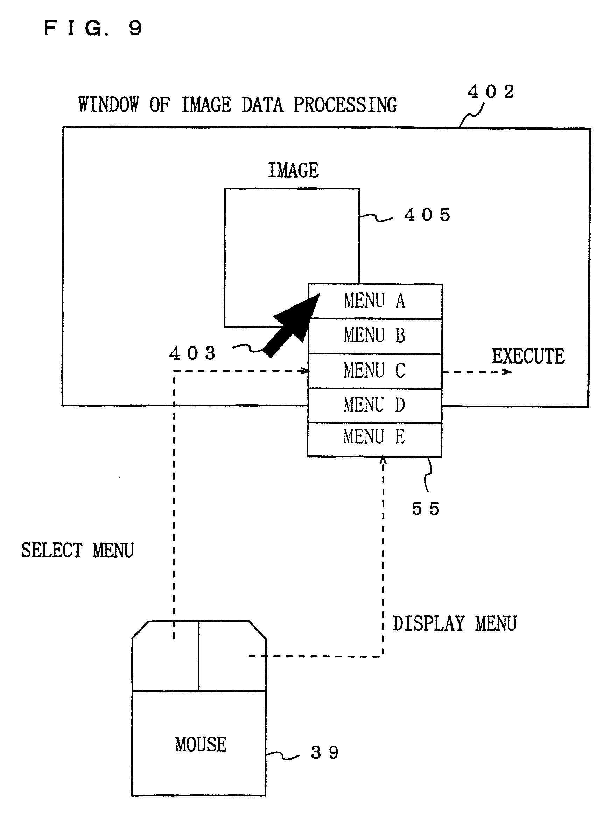

Fig. 9 is an explanatory diagram of a method for accessing a pointer through menu selection. A user operates the mouse 39 (pointing device) and places the pointer 403 on an image 405 supplied on the window 502 of the image data processing. Next, the user clicks a right button of the mouse 39. When an MPU 31 (information processing unit) detects the click, it reads out image related information (Fig.8(b)) included in an information image file corresponding to the image 405 from a recording unit 33 in order to create menu display data. That is, a "command name" is extracted as a menu item and a menu 55 is displayed on a display unit 37. Next, the user operates the mouse 39 in order to move the pointer 403 and places it on a menu item to be selected. Then, a left button of the mouse 39 is clicked in order to select and determine one menu item. When the MPU 31 detects the click, it refers to image related information (Fig. 8(b)) and inputs pointer information corresponding to the selected command in the browser 303 in order to access to the pointer. When the MPU 31 receives a file sent from a server based on accessed location, it executes the received file in accordance with an action table corresponding to the command selected at that time. For example, video is replayed by a real player (trademark).

Here, menu items displayed when clicking an image displayed on the window 502 of the image data processing are determined depending on contents of image related information embedded in the information image file. Further, the information image file including image related information is sent from the server device 20. That is, it is characterized that menu items displayed by a mouse click is determined depending on information downloaded from the server device 20.

### (2) Method through Mouse Operation

When a button of the mouse 39 is manipulated and a key of the keyboard 38 are manipulated under a condition that the window 502 of the image data processing is selected, an access to a predetermined information pointer can be done corresponding to the manipulation. When the mouse 39 is operated and the keyboard 38 is operated, the MPU 31 refers to the image related information and refers to the "Assigning Mouse Operation" (Fig. 8(b)) in order to determine whether or not a corresponding operation is defined. When the corresponding operation has been defined, pointer information corresponding to the operation is read out and the pointer is input to the browser 303 in order to access to the corresponding pointer. When the MPU 31 receives a file returned from a server based on an accessed location, the received file is executed in accordance with an action table corresponding to a command name selected at the time. Here, a same mouse operation may be assigned to a plurality of actions.

### [Specific Example of Access to Information Pointer]

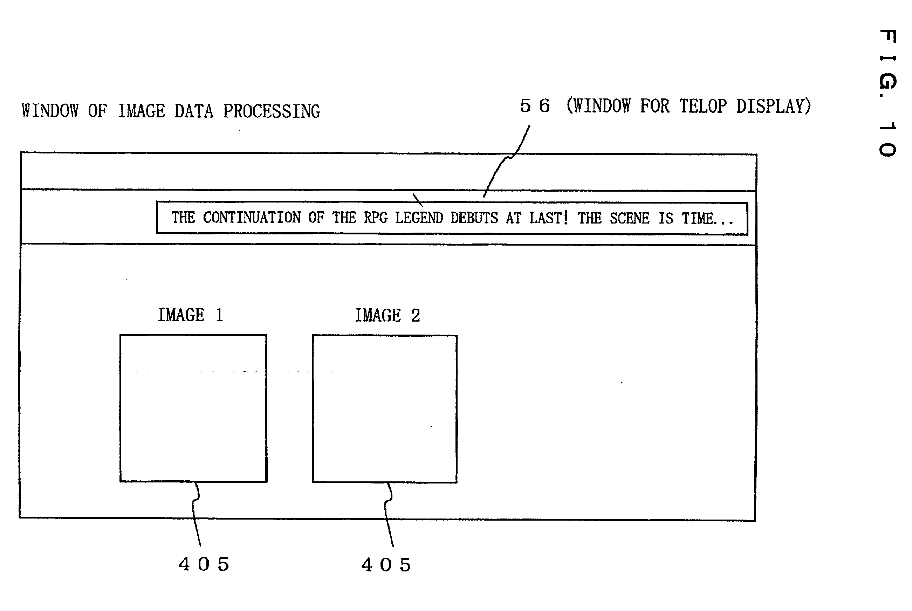

Next, a specific example of an operation when accessing to a pointer for information will be described. Here, an example of "telop display" indicated in the action table in Fig. 8(b) will be described. Fig. 10 is an explanatory diagram of a telop display operation. When a "telop display" is defined in the action table, a pointer in which a text file of a telop is defined for corresponding pointer information, and simultaneous download and storage of information image file into a local disk of the text file and action (control code) of the telop display are defined for the action table. Further, in order to assign a mouse operation, a single click of the left button is defined (the above-described definition is performed by an information image supplier at the server in general).

When an information image file having the image related information is supplied from the browser 303 to the image data processing 305 in the terminal device 30, the MPU 31 refers to the image related information and starts an access to a pointer defined for "save". Then, a text file of the telop is downloaded from a server corresponding to the pointer and save it in the local HDD 33.

After that, when the user operate the mouse 39 in order to click and select an image displayed on the window 502 of the image data processing, the MPU 31 refers to image related information corresponding to the selected image, and when it determines that the control code defined in the action table is "telop display", a long and narrow window for telop display is displayed within an area (it may be outside of the area) of the image data processing shown in Fig. 10 so that text of the telop read out from the HDD 33 is scroll-displayed in the window. As shown in Fig. 10, when a plurality of images 405 and 405 are supplied, telops each of which is different depending on an image selected by the mouse 39 can be displayed.

### [Supply of Information Image File to Image Data Processing]

In the above-described embodiment, it has been described that the information image file can be supplied to the image data processing by performing a drag and drop action from the window 501 of the browser to the window 502 of the image data processing. Here, another supply method will be described.

### (1) Drag and Drop from Menu

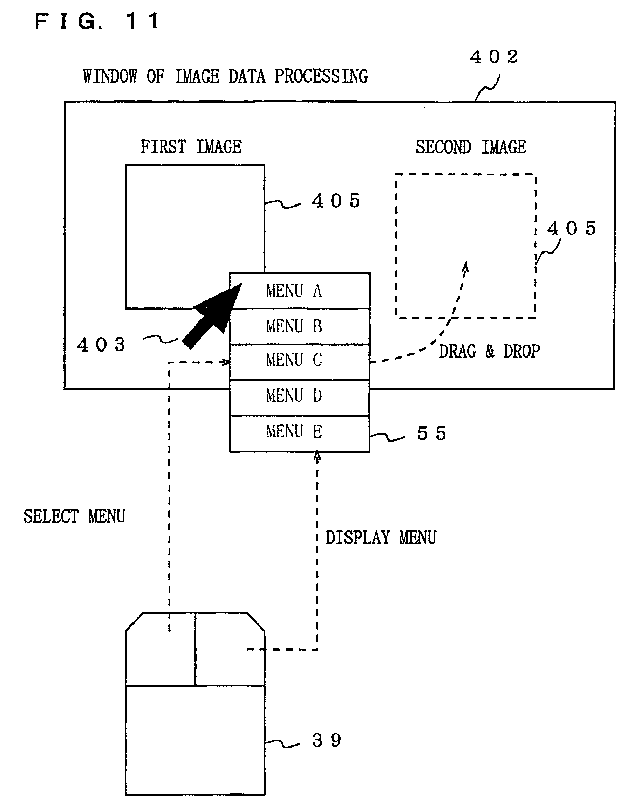

Fig. 11 is an explanatory diagram of a drag and drop operation from a menu. As described above, a menu 55 (first managing area) is displayed by a right button click of the mouse 39 in order to select a menu item for information image addition through the mouse 39. For the menu for information image addition, as defined in the last row in Fig. 8(b), a control code in the action table is defined to a control code specifically for image addition in advance. When the user operates the mouse 39 and performs a drag and drop operation on the menu item for information image addition into the window 502 (second managing area) of the image data processing, the MPU 31 detects the operation and refers to the image related information (Fig. 8(b)). Then, the control code in the action table corresponding to the operated menu item is checked, and when it is determined as "Add Image", an access to a corresponding pointer is started. When a new information image file is downloaded from a predetermined server in response to the access, the MPU 31 supplies newly downloaded information image file to the image data processing 305 in the same manner as the processing that MPU 31 supplies information image file from the browser 303 to image data processing 305.

It produces merit that a browser does not need to be activated each time for supplying a new information image file.

Of course, the menu item for information image addition may be clicked by the mouse 39 simply in order to download the new information image file and supply it to the image data processing 305.

Further, the new information image file may be stored within another information image file which has been supplied already. In this case, when the menu item for information image addition (first managing area) is dragged and dropped, for example, the MPU 31 does not access to a server on a network but refers to image related information of an information image file which is a current subject, reads out another information image file registered in advance therein, and supplies it to the image data processing 305 (second managing area).

In this case, there is an effect that it is not necessary to connect to a server on a network each time for supplying a new information image file.

### (2) Drag-and-Drop from Mail Software

An information image file may be supplied to the image data processing 305 by dragging and dropping an information image file attached to mail software to the window 502 of the image data processing. A viewing window for a mail body or a check window for an attached file will be a first managing area. In this case, since the information image file is transported by placing it on an e-mail in order to be available for a receiver, information can be spread widely and effectively.

### (3) Drag-and-Drop from Arbitrary Folder

An information image file copied in a predetermined folder once from a browser or mail software may be supplied by dragging and dropping it from a corresponding folder (first managing area) to the window 502 (second managing area) of the image data processing. The MPU 31 detects the drag-and-drop operation from an arbitrary folder to the window 502 of the image data processing and supplies an information image file to the image data processing 305 in the same manner as the above-described drag-and-drop processing from the browser.

### (4) Non-Drag-and-Drop Supply method

An information image file can be supplied to the image data processing 305 even by replacing the above-described drag-and-drop operation by other operation. For example, the MPU 31 may detect that an information image file managed outside of the image data processing 305 is clicked in order to supply the information image file to the image data processing 305. Further, when the information image file managed outside of the image data processing 305 is copied on a clip board and then it is pasted from the clip board onto the window 502 of the image data processing, the MPU 31 may detect the operation and supply the information image file to the image data processing.

### (5) Supply from Recording Medium Such as CDROM

Further, the information image file may be supplied from a computer readable recording medium such as CDROM. In this case, an information image file displayed on a folder (first managing area) of the CDROM may be supplied to the image data processing 305 (second managing area) through the above-described drag-and-drop operation, a click operation, and a copy-and-paste operation or the like, for example, or an installer may be activated automatically at the start of the CDROM and the installer may supply an information image file recorded on CDROM or the like, to the image data processing 305. Further, when the installer supplies an information image file, the installer may detect an information image file which has already been supplied to the image data processing 305 in order to select an un-supplied information image file only and then supply it to the image data processing 305.

According to this, an information image file can be distributed as a supplement of a magazine, and it can be distributed to general users in order to cause them to use it.

### [Structures of First Managing Area and Second Managing Area]

While, as shown in Fig. 4, a first managing area and a second managing area may be provided by independent windows (process, program), respectively, another embodiment can be implemented. Several embodiments will be described below.

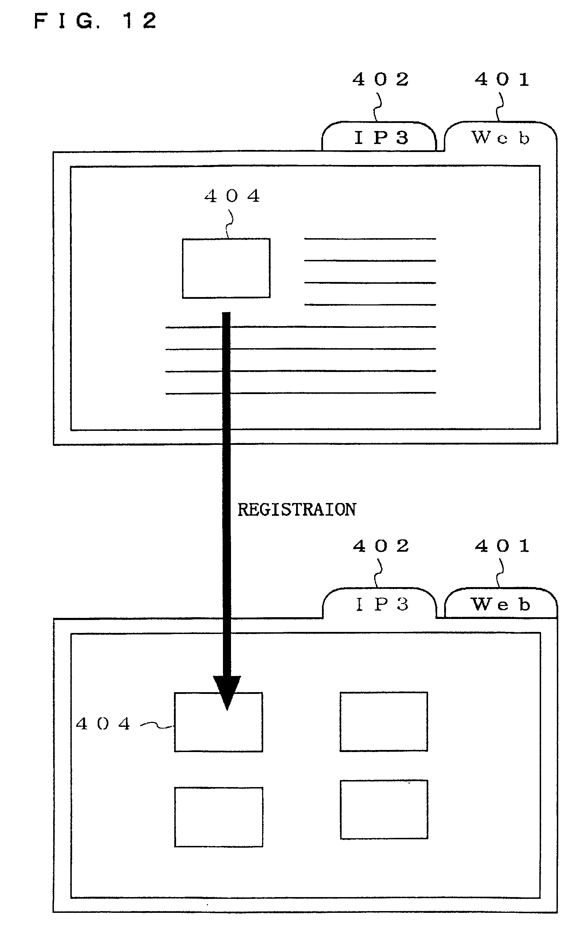

Fig. 12 is an embodiment where a window 501 of a Web browser and a window 502 of image data processing are provided by a single program in order to ask to select a display selection tab at the upper portion of the window through an operation of an input unit 35 and selectively display a window of a selected one. First of all, an information image file 404 displayed on the window 501 of a Web browser is accessed in order to register in the window 502 of the image data processing in the background. As a method for accessing to the information image file 404, the above-described various methods can be adopted. Next, a display selection tab is operated through the input unit 35 in order to display the window 502 of the image data processing. Thus, the information image file having been registered in the image data processing can be accessed.

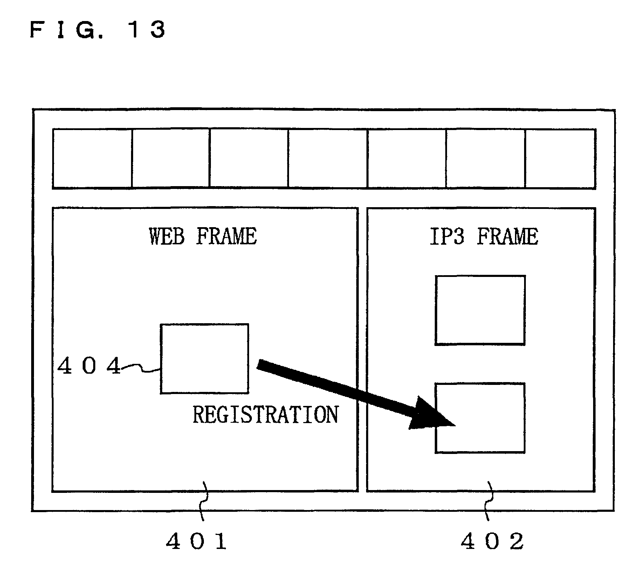

Further, Fig. 13 includes a display window in a frame structure, where one frame is provided as the window 501 of the Web browser and the other frame is provided as the window 502 of the image data processing simultaneously. In this case, while an access operation is easier that drags and drops the information image file 404 from the frame 401 of the Web browser to the frame of the image data processing, the information image file can be supplied to the image data processing through the above-described other access methods.

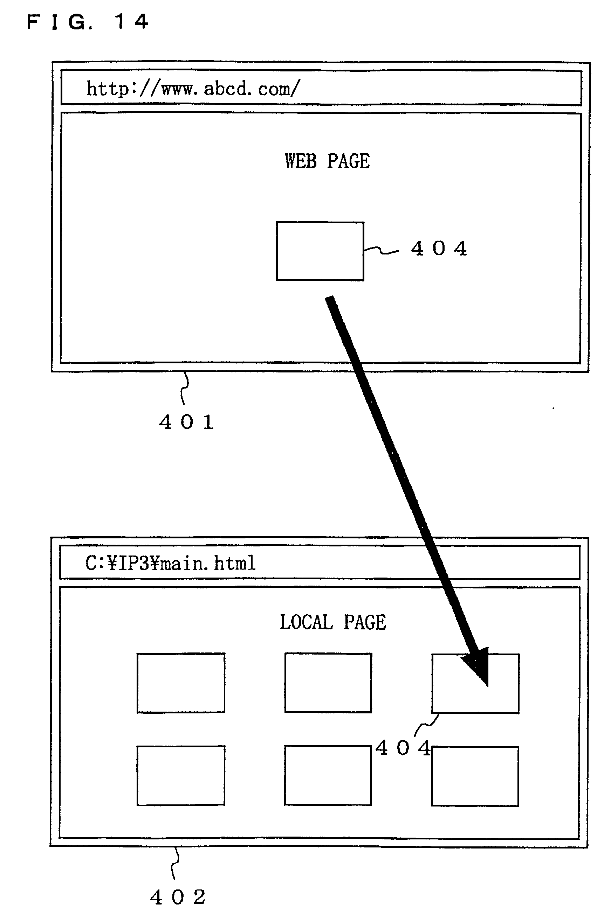

Further, in Fig. 14, when an access is made to the information image file 404 displayed on the window 501 of the Web browser, a processing unit 31 activates a plug-in implemented in advance in the Web Browser. As an access method to the information image file, the above-described various methods can be adopted. The activated plug-in adds management of a new information image file to a local HTML file stored in the storage unit 33 as a second managing area in advance. Then, the local HTML file to which the new information image has been added is expanded on the Web browser as the second managing area 402. When the local HTML file is expanded on the Web browser, it may be expanded on an existing Web browser or may be expanded separately by starting a new Web browser.

### [Encryption of Image Related Information]

Next, encryption processing on image related information added to image data will be described.

### [Encryption Processing in Server Device]

Identification information adding processing 205 of the server device 20 includes a function for encrypting image related information to be added to image data for addition. An encryption algorithm performs update after a predetermined period of time. By encrypting image related information, it can be prevented from that a third party adds, deletes, and modifies image related information illegally in order to use an image file.

### [Decryption processing in Terminal Device]

In the terminal device 30, when referring to the image related information added to image data, the MPU 31 decrypts the image related information. The decryption algorithm is stored in the HDD 33 in advance corresponding to the encryption algorithm, in the server device 20. However, since the encryption algorithm of the server device 20 is updated after a certain period of time, when the encryption algorithm of the server device 20 is updated, it is necessary to update the decryption algorithm of the terminal device 30 so as to be matched with the updated encryption algorithm.

### [Updating Decryption Algorithm]

The server device 20 manages versions of the decryption algorithm stored in the terminal device 30 in database for each ID (IP address, for example) of the corresponding terminal device. When the encryption algorithm of the image related information is updated in the server device 20, Ids of all terminal devices are flagged, and a decryption algorithm corresponding to a new encryption algorithm is sent for update to the flagged one corresponding to the IDs of the corresponding terminal devices among terminal devices accessing to the server device 20 after that. Then, the flags corresponding to the Ids of the terminal devices having been updated are cleared. The decryption algorithm is stored in the HDD 23 of the server device.

The image data processing 305 includes a function for attempting decryption of image related information included in a corresponding information image file when the information image file is supplied and for checking whether or not a data structure of the decrypted image related information is normal. Then, if the decrypted data structure is not normal, it is inhibited to supply the corresponding information image file. It can prevent from supplying an illegally modified information image file. Further, an illegal information image file may be determined based on identification information added to the image data.

### [Billing Processing]

Next, a billing method will be described where an information image file is supplied from a browser to the image data processing 305. When an information image file is supplied from a browser to the image data processing 305, the image data processing 305 accesses to the server device 20 and requests billing processing in order to perform billing.

An access log (creation log) described in the embodiment of the present invention is created under the condition that an information image file has been supplied from a browser to the image data processing 305 in the terminal device 30. That is, when the information image file is supplied to the image data processing 305, the MPU 31 extracts identification information embedded in the information image file from the supplied information image file, and sends the identification information and a file name of the information image file to the server device 20. The server device 20 associates the received identification information and image file name, an IP address and a host name of an accessing terminal, and access date and time in order to create the above-described creation log (Fig. 3). Thus, the fact that the information image file is supplied to the image data processing in the terminal device 30 is recorded in the access log of the server device 20.

### [Billing Processing (1)]

A first billing method is a method whereby billing is performed on only a first supply of a same information image file by a same terminal (or it may be image data processing 305 having a same user or a same ID) while billing is not performed on second and later supplies. When an information image file is supplied to the image data processing 305, the MPU 31 of the terminal device sends to the server device 20 inherent identification information given to the information image file and a file name of the information image file and suggests billing to the server device 30. The MPU 21 of the server suggested for billing compares the IP address and the host name of the accessing terminal at that time, and the received identification information and image file name with the creation log in order to determine whether or not a same information image file was supplied to the image data processing 305 in a same terminal in the past. As a result, if the same image file is supplied, billing is not performed on the supply at that time. On the other hand, if the same information image file is not supplied to the image data processing 305 in the same terminal, it is billed as a new supply.

### [Billing Processing (2)]

A second billing method is a method according to the first billing method for billing newly when a supply is performed at a different date even if it is a supply of the same information image file in the same terminal. As a usage of the information image file, a usage may be considered whereby a free content service can be received before an expiration date. If a same information image file can be supplied in a same terminal repetitively without billing in this case, the expiration date of the free content service becomes meaningless. Thus, even if a same information image file is supplied in a same terminal, billing is performed when the supply is performed on a different date.

When the information image file is supplied to the image data processing 305, the MPU 31 of the terminal device sends, to the server device 20, inherent identification information given to the information image file and a file name of the information image file and further suggests billing to the server device 30. The MPU 21 of the server device suggested for billing compares an IP address and a host name of a terminal accessing at that time and received identification information and image file name with the creation log in order to determine whether or not exactly same data has been registered on a same date. As a result, if it has registered on the same date, no billing is performed. On the other hand, if the same data has not been registered on the same date, billing is performed on supply of the information image file at that time.

### [Billing Method (3)]

In the first and the second billing methods, not a same terminal but a same user may be used for determination. In this case, a user authorization system (function) is provided inside or outside of the server device 20, and when the access from the terminal device 30 to the server device 20 is requested, the user authorization system asks a user to authorize it in order to permit the access to the server device 30 when the user authorization is properly performed. According to this, since a user can be identified, it can be determined whether or not a same information image file was supplied to the image data processing 305 for each user in the past.

Here, a form for embedding image related information in an information image file (icon) may be a package in an icon form as described above or may be a package using Java (trademark) applet, ActiveX (trademark) control, or the like. The Java applet and the ActiveX control are both program units which can be executed by browser software such as Netscape (trademark) and Internet Explore (trademark) . Then, the execution code is described by Java medium code for the Java applet, and by the CPU native code for the ActiveX control and can be started for execution by browsers, respectively. Further, both Java applet and ActiveX control can be graphically displayed on display screens of the browsers. When the Java applet or the ActiveX control, for example, is used, an applet only for displaying an image is prepared instead of an icon in which related information is embedded. Furthermore, when an (1MG) tag is used to display the icon on the browser, the applet may be executed by using (EMBED) or (APPLET) tag. Also, embedding related information for both of them is enough when it is executed in a program form.

### Industrial Applicability

According to the present invention, identification information including transaction identification information inherent to a traded subject and access identification information inherent to an access from a user may be created and the created identification information may be added to predetermined image data provided by a transaction information supply device in order to record a corresponding relationship between the transaction identification information and the above-described traded subject and a corresponding relationship between the access identification information and the information indicating user access condition in advance. Then, by referring to the corresponding relationship, the traded subject corresponding to the identification information added to the image data can be identified and account settlement information and the like such as the name, price and so on specified separately for each traded subject.

Therefore, users can identify the traded subject later only by storing the image data to which identification information is added. Thus, the account settlement can be performed more easily, and therefore the users can perform commerce easily.

Furthermore, by adding access identification information, each access is identified so that an IP address of a terminal that the user operates, the above-described client ID and so on can be identified more easily.

## Claims

1. An electronic commerce system having a transaction information supply device for supplying image data of an traded subject at least over a network, an account settlement processing device for performing account settlement processing, and a terminal for acquiring the image data from said transaction information supply device and requesting account settlement to said account settlement processing device, comprising:
identification information adding means for creating identification information including transaction identification information inherent to a traded subject and access identification information inherent to an access from a user and for adding the created identification information to predetermined image data that said transaction information supply device supplies; and
identification information recording means for recording a corresponding relationship between said transaction identification information and said traded subject and a corresponding relationship between said access identification information and information indicating user access condition added by said identification information adding means.

2. An electronic commerce system according to claim 1 wherein said identification information recording means records account settlement information corresponding to said identification information.

3. An electronic commerce system according to claim 1 wherein said identification information adding means creates said identification information having information indicating an access method to said account settlement processing device.

4. An electronic commerce method in which a terminal having acquired image data of a traded subject supplied from a transaction information supply device over a network requests account settlement processing to an account settlement processing device, comprising the steps of:
creating identification information including transaction identification information inherent to a traded subject and access identification information inherent to an access from a user;
adding said created identification information to predetermined image data that said transaction information supply device sends; and
recording a corresponding relationship between said added transaction identification information and said traded subject and a corresponding relationship between said access identification information and information indicating user access condition.

5. An identification information adding device, comprising:
identification information adding means for, when a transaction information supply device for supplying image data of a traded subject at least over a network supplies predetermined image data, creating identification information including transaction identification information inherent to a traded subject and access identification information inherent to an access from a user to predetermined image data that said transaction information supply device supplies; and
identification information recording means for recording a corresponding relationship between said transaction identification information and said traded subject and a corresponding relationship between said access identification information and information indicating user access condition added by said identification information adding means.

6. A computer readable recording medium for recording an identification information adding program for, when a transaction information supply device for supplying image data of a traded subject at least over a network supplies predetermined image data, comprising:
creating identification information including transaction identification information inherent to a traded subject and access identification information inherent to an access from a user;
adding said created identification information to predetermined image data that said transaction information supply device supplies; and
recording a corresponding relationship between said transaction identification information and said traded subject and a corresponding relationship between said access identification information and information indicating user access condition.

7. A transaction information supply device for supplying image data of an traded subject at least to a terminal connected over a network, comprising:
identification information adding means for creating identification information including transaction identification information inherent to a traded subject and access identification information inherent to an access from a user and for adding the created identification information to predetermined image data that said transaction information supply device supplies; and
identification information recording means for recording a corresponding relationship between said transaction identification information and said traded subject and a corresponding relationship between said access identification information and information indicating user access condition added by said identification information adding means.

8. A computer readable recording medium for recording a transaction information supply program for, when supplying image data of a predetermined traded subject to a terminal connected over a network, comprising:
creating identification information including transaction identification information inherent to a traded subject and access identification information inherent to an access from a user;
adding said created identification information to predetermined image data; and
recording a corresponding relationship between said added transaction identification information and said traded subject and a corresponding relationship between said access identification information and information indicating user access condition.

9. A transaction information supply device according to claim 7, comprising:
account settlement information recording means for recording account settlement information corresponding to transaction identification information inherent a traded subject; and
account settlement information supply means for acquiring and supplying account settlement information corresponding to the identification information from said account settlement information recording means when said identification information is specified.

10. A computer readable recording medium for recording a transaction information supply program according to claim 8 for recording account settlement information corresponding to transaction identification information inherent to a traded subject, and, when said identification information is specified, for acquiring and supplying account settlement information corresponding to the identification information.

11. An account settlement device, comprising:
account settlement information acquiring means for, when transaction identification information inherent to a traded subject is specified and account settlement is instructed, acquiring account settlement information corresponding to said specified transaction identification information from an account settlement information supply device for supplying account settlement information corresponding to transaction identification information;
account settlement processing means for processing account settlement based on account settlement information acquired by said account settlement information acquiring means; and
means for comparing access identification information sent from a user, a client ID and information regarding said user obtained from an update log in order to evaluate accuracy and reliability of information from said user.

12. A computer readable recording medium for recording an account settlement processing program for, when transaction identification information inherent to a traded subject is specified and account settlement is instructed, acquiring account settlement information corresponding to said specified transaction identification information from an account settlement information supply device for supplying account settlement information corresponding to said transaction identification information;
comparing access identification information sent from a user, a client ID and information regarding said user obtained from an update log in order to evaluate accuracy and reliability of information from said user; and
processing account settlement based on the acquired account settlement information.

13. An electronic commerce terminal, comprising:
image data acquiring means for acquiring image data to which identification information including transaction identification information inherent to a traded subject and access identification information inherent to an access from a user is added from a transaction information supply device for supplying image data of a traded subject at least;
identification information extraction means for extracting said identification information from image data acquired by said image data acquiring means; and
account settlement requesting means for sending identification information extracted by said identification information extraction means to an account settlement device and for requesting account settlement to an account settlement processing device for processing account settlement depending on said identification information extracted by said identification information extracting means.

14. A computer readable recording medium for recording an electronic commerce program for: acquiring image data to which identification information including transaction identification information inherent to a traded subject and access identification information inherent to an access from a user is added from a transaction information supply device for supplying image data of a traded subject at least;
extracting said identification information from image data acquired; and
sending said extracted identification information to an account settlement device and requesting account settlement to an account settlement processing device for processing account settlement depending on said extracted identification information.
